# EUROPÄISCHE PATENTSCHRIFT

(11) **EP 2 326 864 B1**
(45) Veröffentlichungstag und Bekanntmachung des Hinweises auf die Patenterteilung: **26.07.2017**
(21) Anmeldenummer: 09781697.9
(22) Anmeldetag: 11.08.2009
(51) Int. Cl.: F16L 51/02, F24J 2/14, F24J 2/46, F24J 2/54

(54) **ANSCHLUSSSYSTEM FÜR EINE SOLARTHERMISCHEN ANLAGE**
CONNECTING SYSTEM FOR A SOLAR-THERMAL INSTALLATION
SYSTÈME DE RACCORDEMENT POUR UNE CENTRALE HÉLIOTHERMIQUE

(30) Priorität: 14.08.2008 DE 102008037711
(43) Veröffentlichungstag der Anmeldung: 01.06.2011
(73) Patentinhaber: Senior Flexonics GmbH, 34121 Kassel (DE)
(72) Erfinder: BÜRGER, Stefan, 34225 Baunatal (DE); VIVES, Francisco Ortiz, 34246 Vellmar (DE)
(74) Vertreter: Maikowski & Ninnemann Patentanwälte Partnerschaft mbB
(86) Internationale Anmeldenummer: PCT/EP2009/060375
(87) Internationale Veröffentlichungsnummer: WO 2010/018166

(56) Entgegenhaltungen:
- EP-A2- 1 998 120
- DE-A1-102007 048 745
- US-A- 4 078 549
- US-A- 4 484 568
- US-A- 4 934 324

## Beschreibung

Die Erfindung betrifft ein Anschlusssystem für eine solarthermische Anlage mit einem um eine Drehachse schwenkbaren Leitungsrohr nach dem Oberbegriff des Anspruches 1.

Im Zuge umweltfreundlicher Energiegewinnung werden heute verstärkt solarthermische Kraftwerke eingesetzt. Solche Kraftwerke weisen üblicherweise Solarkollektoren auf, wie z.B. Parabolspiegel. Mit diesen Solarkollektoren wird die Sonnenstrahlung eingefangen und über Receiverrohre bzw. Absorberrohre in ein Trägerfluid, z.B. Thermoöl, abgegeben. Über diese Absorberrohre und damit verbundene Leitungsrohre wird dann das energiereichere Trägerfluid transportiert. Dabei können innerhalb des Systems bzw. der Leitungsrohre Temperaturen von 500 °C oder mehr erreicht werden.

Da die Solarkollektoren auf Grund der scheinbaren Bewegung der Sonne beweglich ausgebildet sein müssen, müssen die das heiße und unter Druck stehende Trägerfluid führende Leitungsrohre oftmals ebenso schwenkbar sein. Dabei stehen sie aber stets mit ortsfesten Leitungen zur Weitergabe des Trägerfluids in Verbindung. Aufgrund der hohen Temperaturen und der hohen Drücke werden an die Verbindungen zwischen den einzelnen Teilen einer solarthermischen Anlage folglich hohe Anforderungen gestellt.

In der deutschen Patentanmeldung 10 2007 048 745 wird z.B. eine Vorrichtung vorgeschlagen, mittels derer bei hohen Temperaturen und / oder Drücken eine einwandfreie Beweglichkeit der Solarkollektoren gewährleistet wird. Dabei ist eine flexible Rohrverbindung zwischen einer Festleitung und einem Absorberrohr angeordnet und ein Mittel zur drehmomentfreien und / oder kräftefreien Verbindung der flexiblen Rohrleitung mit dem Absorberrohr vorgesehen.

Während die mit Thermoöl betriebenen Anlagen bisher auf max. 400°C Betriebstemperatur und 40bar Betriebsdruck begrenzt waren, werden zur Steigerung der Effektivität und des Prozesswirkungsgrades neue solarthermische Anlagen für den Betrieb mit Dampf bei 500°C und 120bar Betriebdruck ausgelegt.

Wegen dieser extremen Druckbelastung bei sehr hoher Temperatur und der damit einhergehenden Risiken und des hohen Verschleißes, werden andere Flüssigkeiten oder Gase als Trägerfluid in Betracht gezogen.

Zum Beispiel könnten auch Gase oder verflüssigte Salze eingesetzt werden, die den Transport der Solarwärme von einem Absorberrohr zum Kraftwerk bei Temperaturen von 500°C ermöglichen.

Die Steigerung der Temperatur auf 500°C verursacht jedoch eine bedeutend höhere Längsdehnung sowohl der Leitungsrohre einer solarthermischen Anlage bzw. im Speziellen der durch die Solarkollektoren erhitzten Absorberohre als auch der Rohrleitungen im Festnetz. Zudem ist bei einem Betrieb mit flüssigen Salzen eine resistentere Dichtung zu verwenden. Dadurch erreichen die bisher verwendeten flexiblen Verbindungen in der gebräuchlichen Anordnung ihre Einsatzgrenzen.

In den Dokumenten US-A-4484568 und US-A-4078549 ist jeweils ein Anschlusssystem für eine solarthermische Anlage offenbart.

Der Erfindung liegt das Problem zugrunde, ein Anschlusssystem für eine solarthermische Anlage mit einem um eine Drehachse schwenkbaren Leitungsrohr zu schaffen, das auch bei hohen Temperaturen und / oder Drücken eines in dem Leitungsrohr befindlichen Trägerfluids eine längere und sichere Lebensdauer erreicht.

Dieses Problem wird erfindungsgemäß mit dem Anschlusssystem mit den Merkmalen des Anspruchs 1 gelöst.

Danach ist ein Anschlusssystem für eine solarthermische Anlage mit einem um eine Drehachse schwenkbaren Leitungsrohr vorgesehen, das mit einem Trägerfluid gefüllt ist, wobei sich das Leitungsrohr zwischen zwei Enden erstreckt und zum Transport des Trägerfluids an einem ersten Ende über einen Metallschlauch als flexible Rohrverbindung mit einer ortsfesten Festleitung und an seinem zweiten Ende über mindestens ein Verbindungsmittel mit einem weiteren Leitungsrohr verbunden ist. Erfindungsgemäß ist das Leitungsrohr derart gelagert, dass der Metallschlauch nur senkrecht zur Drehachse wirkende Kräfte und das Verbindungsmittel nur parallel zur Drehachse wirkende Kräfte erfährt.

Auf diese Weise werden die mit dem Leitungsrohr verbundenen Elemente - der Metallschlauch als flexible Rohrverbindung und das Verbindungsmittel - vor direkten zweiachsigen Bewegungseinflüssen geschützt. So kann der Metallschlauch an dem ersten Ende optimal für eine Biegebeanspruchung senkrecht zur Drehachse des Leitungsrohres ausgelegt werden, die infolge der Schwenkbewegung des Leitungsrohres und der Fixierung des Metallschlauchs an der ortsfesten Festleitung auf sie wirkt. Eine Beanspruchung des Metallschlauchs durch eine Kraft parallel zu Drehachse, z.B. durch eine Wärmeausdehnung des Leitungsrohres, erfolgt nicht. Dadurch wird ein komplexer mehrachsiger Spannungszustand vermieden und der Metallschlauch nicht zusätzlich durch Torsion beansprucht.

Gleichzeitig wirkt eine parallel zur Drehachse auftretende Kraft aufgrund der Lagerung des Leitungsrohres nur an dem zweiten Ende auf ein mit dem Leitungsrohr in Verbindung stehendes Bauteil. Damit kann an diesem Ende das Verbindungsmittel zur Verbindung des einen Leitungsrohres mit einem weiteren Leitungsrohr gezielt auf eine Kraftkompensation entlang dieser einen Wirkrichtung ausgelegt werden. Da das weitere Leitungsrohr z.B. als Teil einer weiteren Solarkollektoreneinheit ebenfalls um die gemeinsame Drehachse schwenkbar ist, erfährt das Verbindungsmittel so keine Biegung senkrecht zur Drehachse bzw. muss einer derartigen Belastung nicht widerstehen.

Erfindungsgemäß wird also eine klare Trennung der auftretenden Kräfte an den jeweiligen Enden des schwenkbaren Leitungsrohres erreicht, womit der Metallschlauch an dem einen Ende und das Verbindungsmittel an dem anderen Ende nur durch die vorgesehene Bewegung unter Betriebsbedingungen belastet werden und keine Spannungen durch Torsion zu befürchten sind.

Diese Spannungen wären gerade bei angestrebten Betriebstemperaturen von 500°C und 120bar Druck innerhalb des schwenkbaren Leitungsrohres für eine dauerhafte und sichere Auslegung des Anschlusssystems kaum oder nur schwer zu bewältigen.

Es wird dabei als besonders vorteilhaft erachtet, wenn das Leitungsrohr derart gelagert ist, dass sich das Leitungsrohr bei einer Wärmeausdehnung entlang der Erstreckungsrichtung des Leitungsrohres nur in Richtung seines zweiten Endes ausdehnen kann.

So kann das Leitungsrohr im Bereich seines ersten Endes in seiner Erstreckungsrichtung fixiert und im Bereich seines zweiten Endes gleitend geführt sein. Dabei ist mit anderen Worten, das Leitungsrohr mit seinem ersten Ende an einem Festpunkt in axialer Richtung fest eingespannt. Dabei befindet sich der Festpunkt vorzugsweise unmittelbar vor der Anbindung an den Metallschlauch. An dem gegenüberliegenden Ende ist das Leitungsrohr derart "lose" gelagert, dass es zwar in radialer Richtung abgestützt oder eingespannt ist, sich aber entlang seiner Erstreckungsrichtung weiter ausdehnen kann.

Hierzu wird das Leitungsrohr bevorzugt an seinem zweiten Ende in einem Gleitlager geführt. Diese gestattet dann eine Wärmelängsdehnung des Leitungsrohres, die infolge der hohen Betriebstemperaturen durchaus in der Größenordnung von 70cm liegen kann.

Alternativ oder ergänzend ist vorgesehen, dass das Leitungsrohr im Bereich seiner beiden Enden jeweils mit einer Verbindungsstruktur verbunden ist, die zusammen mit dem Leitungsrohr um die Drehachse verschwenkbar gelagert ist, und wobei die dem Verbindungsmittel zugewandte Verbindungsstruktur zusätzlich auch längs zur Drehachse verschwenkbar gelagert ist.

Bei einer Anordnung des Absorberrohres über einem Parabolspiegel einer solarthermischen Anlage bedeutet dies zum Beispiel, dass die beiden Verbindungsstrukturen sowohl zusammen mit dem Parabolspiegel um eine gemeinsame Drehachse verschwenkbar gelagert sind als auch dass gleichzeitig eine Verbindungsstruktur alleine längs zur Drehachse, gegebenenfalls über ein gesondertes Drehlager, verschwenkbar gelagert ist. Auf diese Weise kann auch durch das Verschwenken der Verbindungsstruktur längs zur Drehachse gewährleistet werden, dass das Verbindungsmittel nahezu nur parallel zur Drehachse wirkende Kräfte erfährt. Diese Kräfte werden durch die Schwenkbewegung der Verbindungsstruktur an das Verbindungsmittel zur Kompensation weitergegeben. Idealerweise ist der Schwenkradius längs zur Drehachse um ein Vielfaches größer als die Dehnung bzw. Verkürzung des Leitungsrohres, so dass infolge der Schwenkbewegung der Verbindungsstruktur keine relevanten Querkräfte auf das Leitungsrohr wirken.

In einer Weiterbildung kann dann vorgesehen sein, dass die längs zur Drehachse verschwenkbar gelagerte Verbindungsstruktur infolge einer Wärmeausdehnung des Leitungsrohres entlang der Erstreckungsrichtung des Leitungsrohres längs zur Drehachse verschwenkbar ist. Mit anderen Worten erst durch die Dehnung oder Verkürzung des Leitungsrohres infolge einer Temperaturänderung wird die eine Verbindungsstruktur längs zur Drehachse verschwenkt.

Durch die erfindungsgemäße Lagerung wird eine spezifische Beanspruchung an den jeweiligen Enden des Leitungsrohres ohne Torsionsüberlagerung geschaffen, so dass vergleichsweise einfache Bauteile eingesetzt werden können, die dem spezifischen Belastungsfall dauerhaft standhalten. So sind keine aufwendigen Konstruktionen nötig, mit denen beispielsweise zwischen Festleitung und Leitungsrohr sichergestellt werden muss, dass bei Verschwenken des Leitungsrohres sowohl eine Expansion als auch eine Rotation des Leitungsrohres kompensiert werden kann. Für eine solche Kompensation von Expansion als auch Rotation werden zumeist aufwendig abgedichtete Anschlusssysteme eingesetzt, deren Dichtungen den gegebenen Belastungen nicht dauerhaft standhalten.

Im Rahmen der Erfindung wird es aber nun möglich, dass innerhalb des Anschlusssystems, ausgehend von der Festleitung bis zu dem weiteren Leitungsrohr keine Dichtungen nötig sind. Somit wäre das erfindungsgemäße Anschlusssystem auch für ein chemisch aggressiveres Trägerfluid, wie die bereits erläuterten flüssigen Salze, geeignet, für die z.B. bei einer Betriebstemperatur von 500°C noch keine beständigen Dichtungen bekannt sind.

Der flexible Metallschlauch kompensiert bei Verschwenken des Leitungsrohres die Rotation, verbiegt also senkrecht zur Drehachse. Da er keine Kräfte parallel zur Drehachse erfährt, werden keine Torsionsspannungen erzeugt, die die Materialermüdung beschleunigen können. Auch sind zusätzliche Konstruktionen zur Kraftkompensation, wie z.B. Gelenke, nicht nötig und der flexible Metallschlauch kann auch für höhere Temperaturen und Drücke eines Trägerfluids als bisher verwendet werden.

In einer Weiterbildung ist zusätzlich die Festleitung derart gelagert oder fixiert, dass sie sich bei einer Expansion oder Kontraktion nur an einem dem Metallschlauch gegenüberliegenden Ende dehnt oder verkürzt. Auf diese Weise wird sichergestellt, dass auch durch die Festleitung keine zusätzliche Kraftkomponente auf den Metallschlauch parallel zur Drehachse wirkt und Torsionsspannung erzeugt.

Für die Kraftaufnahme parallel zur Drehachse, maßgeblich z.B. infolge der Wärmeausdehnung des Leitungsrohres, die nur an dem zweiten Ende auftreten kann, können ebenfalls bereits bekannte Verbindungsmittel eingesetzt werden. Diese müssen beispielsweise nur zur Kompensation der Expansion des Leitungsrohres geeignet sein und erfahren keine zusätzlichen Kräfte quer dazu.

So wird in einer Ausführungsvariante vorgesehen, dass das mindestens eine Verbindungsmittel ein zwischen den verbundenen Leitungsrohren vorgesehner Axialkompensator, insbesondere ein außendruckbelasteter Axialkompensator, ist.

Alternativ ist eine Ausführungsvariante denkbar, in der mindestens das eine Verbindungsmittel wenigstens einen flexiblen Metallschlauch aufweist, der in einer U-Form zwischen den beiden verbundenen Leitungsrohren angeordnet ist. Dabei kann nur ein Metallschlauch in U-Form vorgesehen sein, wobei die beiden Schenkel der U-Form im Wesentlichen senkrecht zu der Drehachse sind. In einer Weiterbildung können zum verbesserten Ausgleich der Wärmeausdehnung zwei flexible, miteinander verbundene Metallschläuche vorgesehen sein, die jeweils einen Schenkel der aus zwei Schenkeln bestehenden U-Form bilden.

In einer weiteren alternativen Ausführungsvariante ist mindestens das eine Verbindungsmittel ein Kompensator-Gelenksystem, mit über Kompensatoren verbundenen Rohrleitungen.

Um zu gewährleisten, dass der flexible Metallschlauch oder eine bzw. mehrere der Rohrleitungen zwischen den miteinander verbundenen Leitungsrohren beim Verschwenken um die eine Drehachse mitbewegt werden, wird es bevorzugt, dass sie in einem Halterahmen geführt sind, der mit dem Leitungsrohr die Schwenkbewegung um die Drehachse ausführt. Dies ist selbstverständlich in einfacher Weise nur möglich, da weder der hier vorgesehen Metallschlauch noch alternativ die Rohrleitungen auf Biegung quer zur Drehachse beansprucht werden.

Grundsätzlich wird es als vorteilhaft erachtet, wenn ein eingesetzter flexibler Metallschlauch als mehrwandiger Metall-Wellschlauch ausgebildet ist. Dies gilt sowohl für die Verwendung als Rohrverbindung an dem ersten Ende des Leitungsrohres als auch für die Verwendung als Verbindungsmittels an dem zweiten Ende.

Wie bereits eingangs kurz dargestellt, ist das Leitungsrohr in einer besonders bevorzugten Ausführungsform ein Absorberrohr der solarthermischen Anlage, in dem dem Trägerfluid über Solarkollektoren Energie zugeführt wird.

Dabei kann die solarthermische Anlage insbesondere parabolische Rinnenspiegel aufweisen, die um die Drehachse schwenkbar sind. Damit werden so genannte Parabolrinnen - Kraftwerke geschaffen, deren Solarkollektoren Parabolrinnenspiegel und darin angeordnete Receiverröhren (auch Absorberrohre genannt) aufweisen. Mit diesen Parabolrinnenspiegeln wird die Sonnenstrahlung eingefangen und über die Absorberrohre an das darin befindliche Trägerfluid abgegeben.

Weitere Merkmale und Vorteile der Erfindung werden bei der nachfolgenden Beschreibung von Ausführungsbeispielen anhand der Figuren deutlich werden.

Es zeigen:
- Fig. 1 - 3B: aus dem Stand der Technik bekannte Anschlusssysteme für solarthermische Anlage mit Parabolrinnenspiegeln als Teil der Solarkollektoren-Einheit;
- Fig. 4: eine Ausführungsvariante des erfindungsgemäßen Anschlusssystems mit einem Axialkompensator als Verbindungsmittel zur Verbindung eines Absorberrohres mit einem weiteren Absorberrohr einer solarthermischen Anlagen in perspektivischer Seitenansicht;
- Fig. 5A - 5C: eine weitere Ausführungsvariante mit einer U-förmigen Anordnung von Metallschläuchen als Verbindungsmittel in ansonsten mit Fig. 4 übereinstimmender Konfiguration;
- Fig. 6: eine weitere Ausführungsvariante mit einem Kompensator-Gelenksystem als Verbindungsmittel in ansonsten mit Fig. 4 übereinstimmender Konfiguration.

In den nachfolgenden Figuren werden für übereinstimmende Elemente grundsätzlich gleiche Bezugszeichen verwendet. Dementsprechend sind gleich bezeichnete und wiederholt auftretende Elemente gleich ausgebildet und angeordnet, sofern nichts Gegenteiliges beschrieben ist.

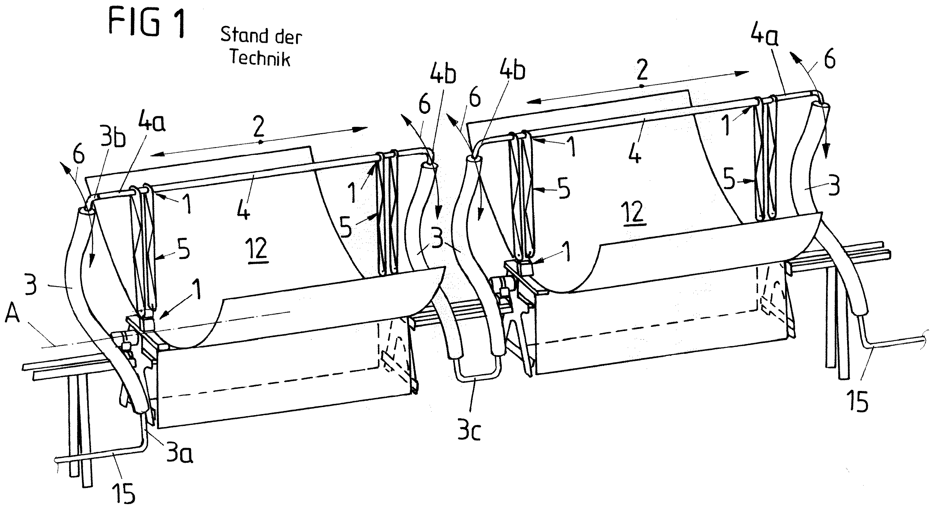

In der Fig. 1 ist eine solarthermische Anlage mit zwei nebeneinander fluchtend angeordneten Parabolrinnenspiegeln 12 dargestellt. Das durch die Sonneneinstrahlung zu erhitzende Trägerfluid (z.B. Öl, Gase oder verflüssigtes Salz) wird durch Absorberrohre 4 (auch Receiverrohre genannt) als Leitungsrohr im Sinne der Erfindung geführt, die im Wesentlichen in der Brennlinie der Parabolrinnenspiegel 12 liegen. Hierfür ist das jeweilige Absorberrohr 4 über eine Verbindungsstruktur 5 oberhalb der gewölbten Fläche der Parabolrinnenspiegel 12 geführt und mit seinen beiden sich gegenüberliegenden Enden 4a, 4b an der Verbindungsstruktur 5 gelagert. Die Verbindungsstruktur 5 ragt hierzu in der gezeigten Ansicht an zwei Seitenkanten der Parabolrinnenspiegel 12 empor, so dass sich der Parabolrinnenspiegel 12 dazwischen befindet.

Auf Grund der scheinbaren Sonnenbewegung müssen die Parabolrinnenspiegel 12 der solarthermischen Anlage im Laufe des Tages dem sich ändernden Sonnenstand nachgeführt werden und können deshalb um eine Drehachse A entlang einer Schwenkbewegung 6 verschwenkt werden. Einschließlich der Unwetter-Parkstellung, bei der die Spiegelfläche des Parabolrinnenspiegels 12 nach unten gerichtet ist, ergibt sich eine Schwenkbewegung 6 um ca. 270°. Damit dabei das Absorberrohr 4 stets in der Brennlinie der Parabolrinnenspiegel 12 verbleibt, ist es ebenfalls gemeinsam mit dem Parabolrinnenspiegel 12 um die Drehachse A schwenkbar.

Weiter weist die Verbindungsstruktur 5 jeweils ein Drehlager 1 im Bereich des Parabolrinnenspiegels 12 und an der Lagerstelle für das Absorberrohr 4 auf, so dass eine Wärmelängsdehnung 2 des zugeordneten Absorberrohres 4 parallel zur Drehachse A nicht zu einem Verbiegen des Absorberrohres 4 zwischen den beiden Verbindungsstrukturen 5, 5 führt.

Das Absorberrohr 4 ist weiterhin im Bereich eines ersten Endes 4a über einen flexiblen Metallschlauch 3 als Rohrverbindung mit einer ortsfesten Festleitung 15 verbunden. Diese Festleitung 15 ist unbeweglich fixiert und kann seine Position bei Verschwenken des Absorberrohrs 4 um die Drehachse A nicht verändern. Der Metallschlauch 3 ist somit mit einem Ende 3b an das Absorberrohr 4 und mit einem anderen Ende 3a an die Festleitung 15 angeschlossen.

Damit auch bei Verschwenken des Absorberrohrs 4 das heiße und unter Druck stehende Trägerfluid in die Festleitung 15 eingespeist und weitertransportiert werden kann, kann der flexible Metallschlauch 3 wenigstens senkrecht zu Drehachse A entlang der Schwenkbewegung 6 verbogen werden.

Der Metallschlauch 3 ist daher so ausgebildet und angeordnet, dass er bei der Schwenkbewegung 6 des Parabolrinnenspiegels 12 eine spiralförmige Auf- und Abrollbewegung vollzieht. Die Krafteinleitung für die Schlauchbiegung erfolgt an seinem einen Ende 3b durch das im Brennpunkt des Parabolspiegels 12 befindliche mitschwenkende Absorberrohr 4. Das Absorberrohr 4 ist im Bereich seiner Enden 4a, 4b an der Verbindungsstruktur 5 über jeweils ein weiteres Drehlager 1 drehbar gelagert, so dass möglichst keine Kraft infolge der Schwenkbewegung 6 auf das Absorberrohr 4 wirkt. Gleichzeitig wird in axialer Richtung, also in Erstreckungsrichtung des Absorberrohres 4, eine Dehnung des Absorberrohres 4 zugelassen.

Zwischen den beiden Parabolrinnenspiegeln 12 sind die beiden Absorberrohre 4, 4 im Bereich ihres jeweiligen Endes 4b ebenfalls jeweils mit einem flexiblen Metallschlauch 3 verbunden. Die beiden Metallschläuche 3 stehen hier wiederum über ein starres Verbindungsstück 3c miteinander in Kontakt, durch das hindurch ebenso das Trägerfluid transportiert werden kann.

Zusätzlich zu der Schwenkbewegung 6 des Parabolrinnenspiegels 12 sind auch die parallel zur Drehachse A bzw. quer zur Schwenkebene einwirkenden Wärmedehnungen der angeschlossenen Rohrleitungen, zwischen fester Rohrleitung 15 einerseits und Absorberrohr 4 anderseits, aufzunehmen. So dehnen sich bei zunehmender Temperatur beispielsweise die Absorberrohre 4, 4 entlang ihrer Längserstreckung in Richtung beider Enden 4a und 4b aus und weisen daher eine beidseitige Wärmeausdehnung 2 auf.

An den beiden Enden 4a, 4b übernimmt der speziell entwickelte, flexible Metallschlauch 3 alle auftretenden Bewegungen.

Die Aufnahmemöglichkeit für alle Bewegungen quer zur Biegeebene bzw. parallel zur Drehachse A ist jedoch begrenzt, weil sie zu Torsions-Spannungen im Metallschlauch 3 führen, die zu den Spannungen durch Druck bei der hohen Betriebstemperatur hinzu zu rechnen sind und raschere Materialermüdung bewirken können.

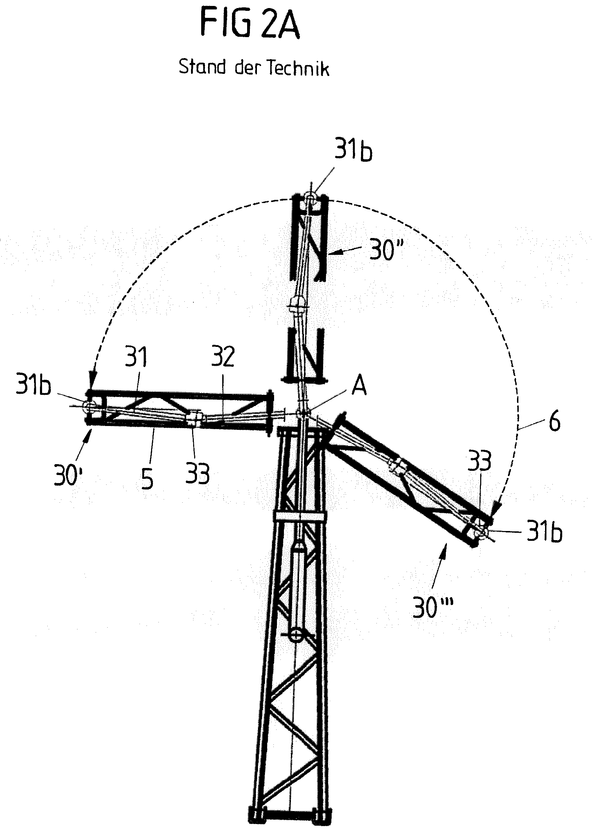

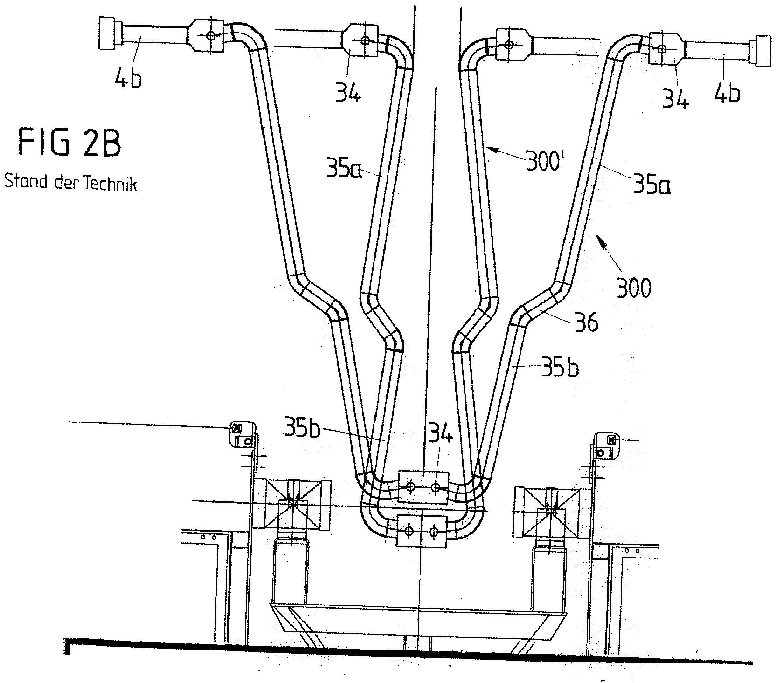

Eine alternative Konstruktionsvariante aus dem Stand der Technik zeigen die Fig. 2A und 2B.

Hierin wird zunächst in Fig. 2A ein Dreigelenksystem gezeigt, das aus einzelnen Zwischenrohren bzw. Rohrsegmenten 31 und 32 besteht, die über ein Rohrgelenk 33 miteinander verbunden sind. Dieses Dreigelenksystem wird anstelle des flexiblen Metallschlauchs 3 zwischen der Festleitung 15 und dem Absorberrohr 4 eingesetzt. Dementsprechend ist auch eines der Zwischenrohre 31 an seinem Ende 31 b mit dem Absorberrohr 4 verbunden.

Die Fig. 2A zeigt weiterhin verschiedene Positionen 30', 30" und 30'" des Dreigelenksystems bei unterschiedliche großen Verschwenkungen des Absorberrohres 4 mit der Verbindungsstruktur 5 um die Drehachse A.

Analog wird in der Fig. 2B eine prinzipiell ähnliche Ausführung für die Verbindung zweier Absorberrohre 4, 4 dargestellt. Dabei ist jeweils an den Enden 4b der Absorberrohre 4, 4 ein Rohrgelenk 34 vorgesehen, das mit einem Rohrsegment 35a verbunden ist. Darin schließt sich ein Übergangsabschnitt 36 an, der der Verbindung mit einem weiteren Rohrsegment 35b dient. Über ein zusätzliches Rohrgelenk 34 sind dann die beiden Rohrsegmente 35b der einzelnen zu verbindenden Absorberrohre 4, 4 miteinander verbunden.

Anhand der beiden in der Fig. 2B dargestellten Längsdehnungspositionen 300 und 300' ist erkennbar, wie diese Konstruktion eine Wärmelängsdehnung 2 der Absorberrohre 4, 4 kompensiert. Dabei zeigt die Längsdehnungsposition 300 einen kühleren Betriebszustand als die Längsdehnungsposition 300'.

Die Rohrgelenke 34, sind ebenso wie die Rohrgelenke 33, mit balligen Dichtköpfen versehen, die geringfügige Winkelbewegungen der angeschlossenen Rohrsegmente 31, 32 bzw. 35a, 35b relativ zu dem Absorberrohr 4 gestatten. Das gezeigte Dreigelenksystem, dessen Rohrgelenke 33 bzw. 34 in dieser Bauart auch "balljoint" genannt werden, kann folglich lineare Bewegungen ausgleichen. Es übernimmt damit die Schwenkbewegung 6 und in eingeschränktem Umfang auch die Wärmedehnung 2 quer zur Schwenkebene.

Die Rohrgelenke 33 bzw. 34 sind aber mit Dichtungen versehen, die so bei der Drehung um die Drehachse A einem Verschleiß unterworfen sind. Die dargestellten Konstruktionen werden daher üblicherweise für Thermoöl als Trägerfluid mit einer Betriebstemperatur von max. 400°C und einem Betriebsdruck von 23 bar eingesetzt. Für den Einsatz von flüssigem Salz bei 500°C als zu führendem Trägerfluid gibt es noch kein geeignetes Dichtungsmaterial, das der Belastung infolge der Schwenkbewegung 6 und Wärmeausdehnung 2 dauerhaft standhalten kann. Zudem müssen bei größerem Bewegungsaufnahmebedarf zusätzliche flexible Elemente, wie die Rohrgelenke 33, 34, bzw. Rohrsegmente 31, 32 bzw. 35a, 35b eingebaut werden, wodurch die Konstruktion teuer und schwer montierbar wird.

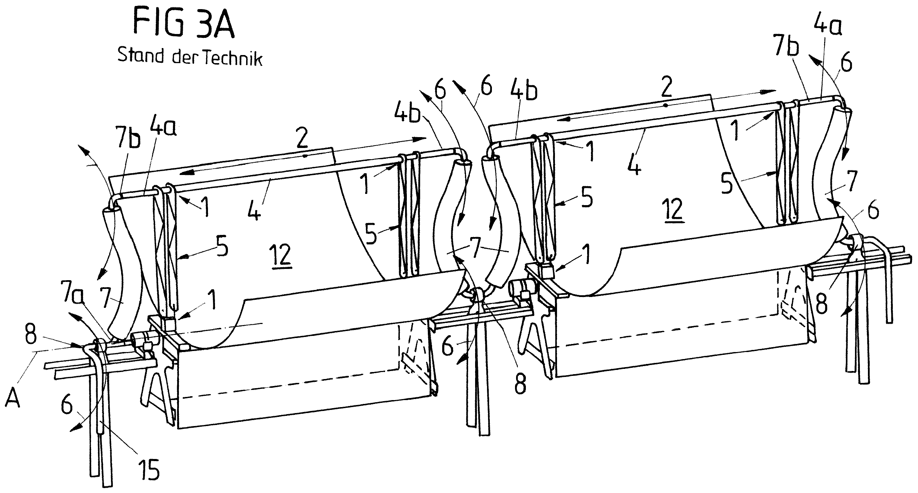

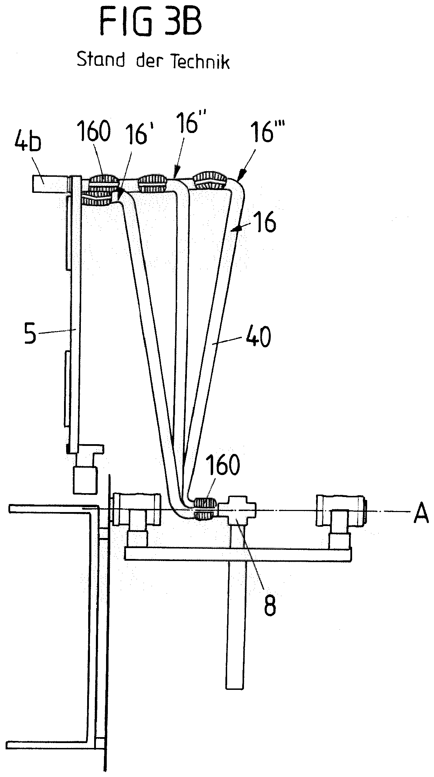

Ein alternatives Konzept, das wenigstens teilweise bereits aus der deutschen Patentanmeldung 10 2007 048 745 bekannt ist und das auch für geometrisch gleichartige Anlagen verwendbar ist, bei denen Dampf bei 500°C und 120bar Druck als Trägerfluid Verwendung findet, zeigen die Fig. 3A und 3B.

Hierbei werden zum einen entsprechend der Fig. 3A an den Enden 4a, 4b der Absorberrohre 4 in Richtung der Drehachse A gebogene bzw. biegbare flexible Metallschläuche 7 eingesetzt. Diese werden an ihrem einen Ende 7b drehfest mit dem Ende 4a eines Absorberrohres 4 verbunden. Sie kompensieren jedoch nur noch die Wärmelängsdehnung 2, da sich an ihrem anderen Ende 7a mit einer geeigneten Drehdurchführung 8 verbunden sind. Mittels dieser Drehdurchführung 8 ist eine Rotation bzw. eine Verschwenken des Metallschlauches 7 um die Drehachse A und damit relativ zu der an die Drehdurchführung 8 angeschlossenen Festleitung 15 möglich.

Eine solche Drehdurchführung 8 verbindet dann ebenso zwei gleichartig ausgebildete Metallschläuche 7, 7 zwischen zwei Absorberrohren 4, 4.

In einer alternativen Ausführung mit einer Drehdurchführung 8 ist es entsprechend der Fig. 3B möglich, anstelle eines flexiblen Metallschlauches 7 ein starres, Z-förmiges Rohrteil 40 zu verwenden, dass mit Kompensatoren 160 versehen ist.

Wie in der Fig. 3B ersichtlich ist, gestattet ein derartiger Kompensator 160 ähnlich den Rohrgelenken 33 und 34 der Fig. 2A und 2B einen leichten Winkelversatz des Z-förmigen Rohrteils 40 bei einer Wärmelängsdehnung 2 des Absorberrohres 4. Obwohl das Rohrteil 40 an einem Ende über die Drehdurchführung 8 in seiner Position drehbar um Drehachse A fixiert ist, kann damit eine infolge der Wärmeausdehnung 2 auf das Rohrteil 40 wirkende Kraft parallel zur Drehachse A kompensiert werden.

So wird im kalten Zustand eine in der Fig. 3B gezeigte erste Position 16', im erwärmten Zustand eine zweite Position 16" und im heißen Zustand eine dritte Position 16'" eingenommen. Bei den unterschiedlichen Positionen 16', 16" und 16'" ist das Rohrteil 40 dementsprechend an seinem mit dem Ende 4b des Absorberrohres 4 verbundenen Ende parallel zu Drehachse A unterschiedlich stark relativ zu der fixierten Drehdurchführung 8 ausgelenkt. Der sich daraus ergebende Winkelversatz wird durch die Kompensatoren 160 kompensiert, die zwischen dem Ende 4b und dem Rohrteil 40 bzw. zwischen Rohrteil 40 und der Drehdurchführung 8 angeordnet sind.

Diesem Konstruktionskonzept liegt jedoch auch die Schwierigkeit zugrunde, dass zum jetzigen Zeitpunkt keine Dichtungen für die Drehdurchführungen 8 bekannt sind, die für flüssiges Salz oder vergleichbare Medien als Trägerfluid bei 500°C dauerhaft beständig sind.

Die vorliegende Erfindung löst das beschriebene Problem durch eine Anordnung bewährter Elemente, die für die Betriebsbedingungen geeignet sind und insbesondere auch langfristig bei der Verwendung von Salz, oder alternativen Medien als flüssigen oder gasförmigen Wärmeträger, bei den genannten Betriebsparametern beständig sind.

Hierfür wird das Absorberrohr 4 derart gelagert, dass jedem Element nur die Belastung zuteil wird, für die es dauerhaft bestens geeignet ist. Dies wird im vorliegenden Beispiel durch eine gezielte Anordnung von Festpunkten bzw. Fixierungen 9 und Gleitlagern 17 erreicht, die die an das Absorberrohr 4 angeschlossenen Bauteile vor zweiachsigen Bewegungseinflüssen schützen.

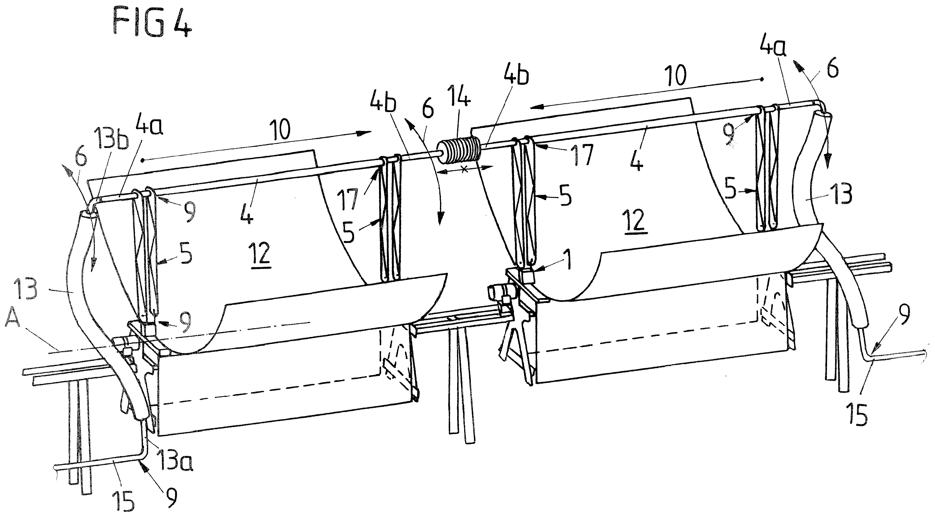

Wie die Fig. 4 zeigt, wird ein flexibler Metallschlauch 13 als Rohrverbindung zwischen dem Ende 4a des Absorberrohres 4 und der Festleitung 15 verwendet. Dieser stimmt im Wesentlichen mit dem Metallschlauch 3 der Fig. 1 überrein und könnte beispielsweise ein Metall-Wellschlauch sein.

Im Unterschied zur Anordnung der Fig. 1 sind nun aber sowohl im Bereich des Endes 13a des Metallschlauches 13, an dem die Festleitung 15 angeschlossen ist, als auch im Bereich des gegenüberliegenden Endes 13b Maßnahmen getroffen, dass der Metallschlauch 13 nicht mit Kräften belastet wird, die parallel zur Drehachse A wirken. Hierzu sind axiale Fixierungen 9 entlang der Rohrachsen der Festleitung 15 und des Absorberrohres 4 vorgesehen, so dass sich zum einen die Festleitung 15 nicht in Richtung des Endes 13a und das Absorberrohr 4 nicht in Richtung des Endes 13b des Metallschlauchs 13 dehnen oder in umgekehrter Richtung verkürzen kann. Dies wird beispielsweise durch entsprechende Lager, Halterungen oder Anschläge, die z.B. mit Wellenabsätzen des Absorberrohres 4 zusammenwirken, erreicht werden, die prinzipiell bekannt sind.

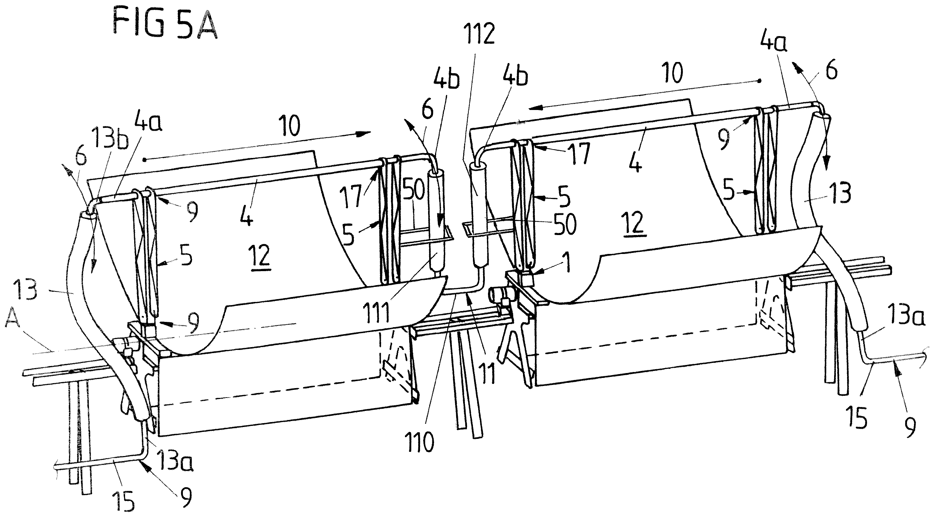

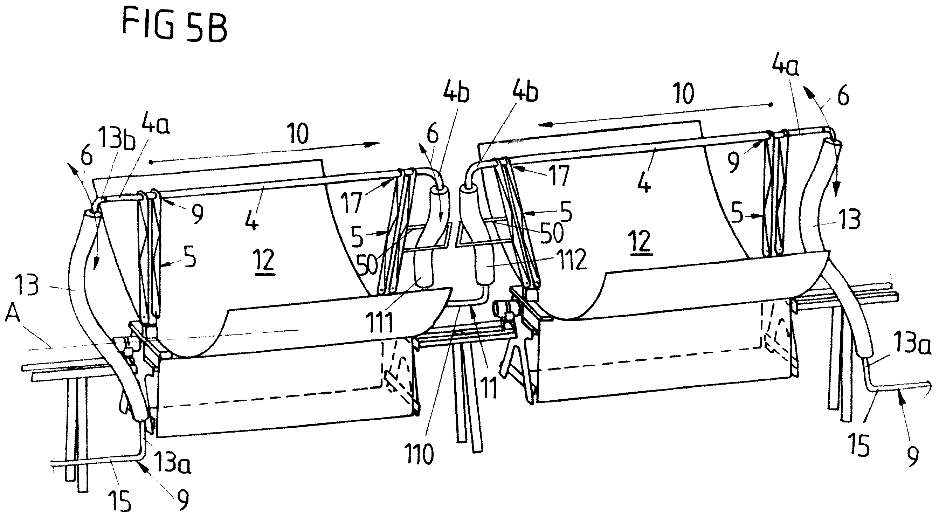

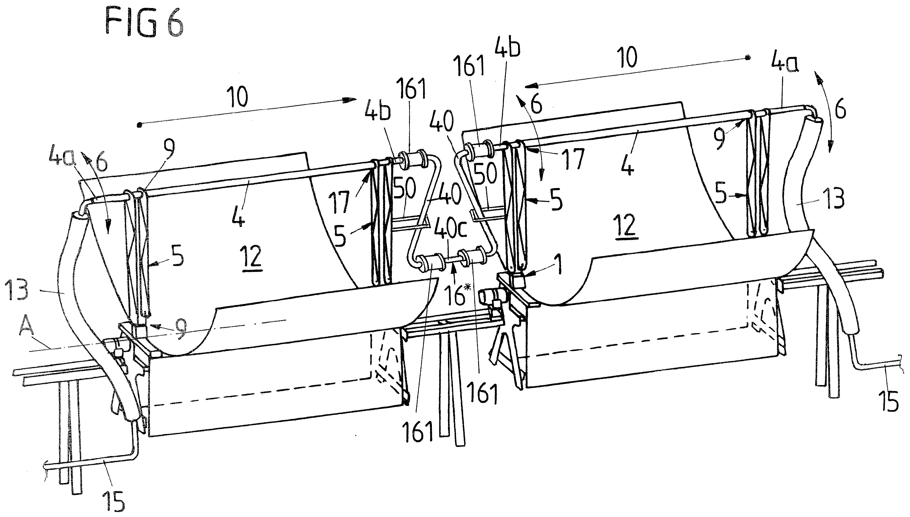

So ist vorliegend im Bereich eines aus den Fig. 1 und 3A und 3B bekannten Drehlagers 1, mit dem das Absorberrohr 4 im Bereich seines Endes 4a an der Verbindungsstruktur 5 drehbar gelagert ist, in Fig. 4 sowie nachfolgend in den Figuren 5A, 5B und 6, zusätzlich eine axiale Fixierung 9 vorgesehen. Diese axiale Fixierung 9 bildet einen Festpunkt für das Absorberohr 4, so dass sich bei einer Wärmelängsdehnung, die bei den hohen Betriebstemperaturen durchaus im Bereich von 70cm und mehr liegen kann, das Absorberrohr 4 nur in Richtung des Endes 4b verlängern kann, das dem Metallschlauch 13 gegenüberliegt. Entgegen der beidseitigen Wärmelängsdehnung 2 des Absorberrohres 4 der vorangegangenen Figuren wird folglich nur eine einseitige Wärmelängsdehnung 10 über Gleitlager 17 hinweg zugelassen, wie nachfolgend noch erläutert werden wird.

Ebenso ist die dem Ende 4a zugeordnete Verbindungsstruktur 5 mit einer Fixierung 9 im Bereich des Parabolrinnenspiegels 12 versehen, so dass ein Verschwenken dieser Verbindungsstruktur 5 quer zur Drehachse A nicht möglich ist.

Analog wird ein Festpunkt durch eine axiale Fixierung 9 an der Festleitung 15 vorgesehen. Das Absorberrohr 4 und die Festleitung 15 können sich somit jeweils nur in die von dem Metallschlauch 13 abgewandte Richtung dehnen.

Damit sind sowohl auf der Seite der Festleitung 15 als auch auf der Seite des Absorberrohres 4 Festpunkte angeordnet, aufgrund derer der Metallschlauch 13 keine Bewegungen und damit keine Kräfte quer zu seiner Biegeebene bzw. parallel zur Drehachse A erfährt.

Bei der Schwenkbewegung 6 des Parabolspiegels 12 um z.B. bis zu 270° wird der Metallschlauch 13 somit so angeordnet, dass er in einer Ebene eine spiralförmige Auf- und Abrollbewegung vollzieht. Der hier verwendete Metallschlauch 13 ist befreit von allen anderen Bewegungen. Dadurch kann eine im Metallschlauch 13 zusätzlich auftretende Torsionsbespannung verhindert werden, die erheblich zur Materialermüdung beitragen würde. Ein derartiger Metallschlauch 13 ist ohne zusätzliche Dichtungen druckfest und vakuumdicht und ist so auch gegenüber flüssigen Salzen bei über 500°C dauerhaft beständig.

Im Bereich des Endes 4b des Absorberrohres 4, das dem Metallschlauch 13 gegenüberliegt, ist dementsprechend eine Lagerung vorgesehen, die eine Ausdehnung des Absorberrohres 4 in eine Richtung parallel zur Drehachse A und damit entlang seiner Längserstreckung gestattet. Dies wird über Gleitlager 17 realisiert, über die das Absorberrohr 4 im Bereich des Endes 4b an der Verbindungsstruktur 5 drehbar gelagert ist. Zusätzlich ist die an dem Ende 4b des Absorberrohres 4 vorgesehene Verbindungsstruktur 5 um das Drehlager 1 längs zur Drehachse A schwenkbar ausgeführt.

Zur Verbindung mit dem nachfolgenden Absorberrohr 4 des nächsten Parabolrinnenspiegels 12 ist in der Fig. 4 ein Axialkompensator 14 als Verbindungsmittel gezeigt. Dieser Axialkompensator 14 in der Form eines metallischen Balg-Kompensators verbindet die beiden Absorberrohre 4, 4 fluchtend miteinander und gestattet den Ausgleich der Wärmelängsdehnung 10 parallel zur Drehachse A. Durch den synchronen Verlauf der Schwenkbewegungen 6, 6 der beiden Absorberrohre 4, 4 erfährt der Axialkompensator 14 folglich keine Biegekräfte quer zur Drehachse A bzw. quer zur Längsachse der Absorberrohre 4, 4. Da stets betriebsbedingt für einen größtmöglichen Synchronlauf gesorgt ist, wird der Axialkompensator 14 nur durch die vorgesehene (Längs-)Bewegung unter Betriebsbedingungen belastet werden und es sind keine Spannungen durch Torsion zu befürchten. Dichtungen sind innerhalb des Axialkompensators 14 nicht nötig, so dass auch hier eine dauerhafte Auslegung für anspruchsvollste Trägerfluide, die durch den Axialkompensator 14 hindurch zu führen sind, ohne weiteres möglich ist.

Eine alternative Ausführungsvariante ist mit den Fig. 5A bis 5C gezeigt. Diese stellen in mit der Fig. 4 übereinstimmender, perspektivischer Seitenansicht die solarthermische Anlage dar, wobei ein Unterschied in der Ausgestaltung der Verbindung der beiden Absorberrohre 4, 4 liegt. Anstelle eines Axialkompensators 14 wird hier eine U-förmige Anordnung bzw. U-Form 11 zweier flexibler Metallschläuche 111 und 112 gewählt, die zwischen der Verbindungsstruktur 5 des einen Absorberrohrer 4 und der Verbindungsstruktur 5 des anderen Absorberrohrer 4 vorgesehen ist. Dabei ist der Metallschlauch 111 mit dem Ende 4b des einen (in der Fig. 5A dem linken) Absorberrohres 4 und der Metallschlauch 112 mit dem Ende 4b des anderen (in der Fig. 5A dem rechten) Absorberrohr 4 verbunden.

Die beiden Metallschläuche 111 und 112 bilden jeweils einen der sich gegenüberliegenden Schenkel der U-Form 11 und sind über ein starres Rohrleitungsstück 110 am Fuß der U-Form 11 miteinander verbunden. In dem in der Fig. 5A gezeigten Betriebszustand verlaufen die Metallschläuche 111, 112 im Wesentlichen parallel zueinander und senkrecht von der Längsachse der Absorberrohre 4, 4 in Richtung der Drehachse A.

In der Mitte ihrer Längserstreckung werden die Metallschläuche 111, 112 jeweils von einem Halterahmen 50 umgriffen bzw. sind durch den Halterahmen 50 hindurchgeführt. Dieser Halterahmen 50 ist starr mit der jeweiligen Verbindungsstruktur 5 verbunden, so dass er zusammen mit der Verbindungsstruktur 5 und dem Absorberrohr 4 um die Drehachse A verschwenkbar ist. Dies unterstützt bei der Schwenkbewegung 6 um die Drehachse A die Mitnahme der Metallschläuche 111 und 112 und verhindert zusätzlich, dass die Metallschläuche 111 und 112 verdreht werden und dadurch auf Torsion beansprucht werden.

Vielmehr erfahren die Metallschläuche 111 und 112 aufgrund der erläuterten Lagerung der Absorberrohre 4, 4 jeweils nur Kräfte, die infolge der einseitigen Wärmelängsdehnung 10 der Absorberrohre 4, 4 parallel zur Drehachse A wirken und zu kompensieren sind. Folglich erfolgt eine Krafteinleitung in den Metallschlauch 111 bzw. 112 jeweils nur an dessen Verbindung mit dem Ende 4b des Absorberrohres 4 entlang der mit der Drehachse A fluchtenden Längsachse des Absorberrohres 4. Ausgehend von dem in der Fig. 5A gezeigten Betriebszustand kann dies bedeuten, dass das abkühlende Absorberrohr 4 kontrahiert und damit eine Kraft parallel zur Drehachse A in Richtung des Ende 4a wirkt oder dass sich das erwärmende Absorberrohr 4 dehnt und damit eine Kraft parallel zur Drehachse A in Richtung des anderen Absorberrohres 4 wirkt.

Da die Metallschläuche 111 und 112 flexibel und über das starre Rohrleitungsstück 110 am Fuß der U-Form 11 miteinander verbunden sind, werden die Metallschläuche 111 und 112 nur auf Biegung beansprucht. Auch aufgrund der Begrenzung durch die Halterahmen 50 werden sich die Metallschläuche 111 und 112 daher nur in der von der Längsachse des jeweiligen Absorberrohres 4 und der Drehachse A aufgespannten Ebene wölben, um die Expansion oder Kontraktion der Absorberrohre 4 zu kompensieren.

Einen ausgehend von der Fig. 5A erhitzten Zustand der Absorberrohre 4, 4 zeigt die Fig. 5B. Hierin folgte in beiden dargestellten Absorberrohren 4, 4 aufgrund der axialen Dehnungsbegrenzung (Fixierungen 9) im Bereich der Enden 4a eine einseitige Wärmelängsdehnung 10 des Absorberrohres 4 jeweils in Richtung des gegenüberliegenden, fluchtenden Absorberrohres 4.

So führt die Wärmelängsdehnung 10 zu einer Verlängerung des Absorberrohres 4 im Bereich des Endes 4b. Diese Verlängerung kann beispielsweise ausschließlich relativ zu der Verbindungsstruktur 5 an dem zweiten Ende 4b geschehen, indem eine entsprechende Gleit- oder Führungslagerung vorgesehen ist. Hierbei würde sich dann das Absorberrohr 4 nur relativ zu den senkrecht zur Drehachse A verbleibenden Verbindungsstrukturen 5 an dem Ende 4b verlängern. Vorliegend wird es jedoch bevorzugt, dass die mit dem Ende 4b des Absorberrohres 4 in Verbindung stehende Verbindungsstruktur 5 mittels des Drehlagers 1 längs zur Drehachse A verschwenkt werden kann, um die einseitige Wärmelängsdehnung 10 zu gestatten. Die jeweils im Bereich des Endes 4b mit dem Absorberrohr 4 verbundene Verbindungsstruktur 5 wird also ausgehend von dem in Fig. 5A dargestellten Zustand bei Erwärmung des Absorberrohres 4 in Richtung des anderen Absorberrohres 4 längs zur Drehachse A und um das Drehlager 1 verkippt bzw. verschwenkt.

Die Metallschläuche 111 und 112 werden entsprechend der auftretenden Belastung gebogen, um die parallel zur Drehachse A wirkenden Kräfte zu kompensieren. Dabei sind die Metallschläuche 111 und 112 an den oberen Enden der ursprünglichen U-Form 11 einander angenähert worden, während am Fuße der ursprünglichen U-Form 11 ihr Abstand über das starre Rohrleitungsstück 110 fest bleibt. Sie sind dementsprechend gebogen bzw. gewölbt, so dass die ursprüngliche U-Form 11 unterhalb der Halterahmen 50 breiter ist und sich der so definierte Zwischenraum zwischen den Metallschläuchen 111 und 112 und dem Rohrleitungsstück 110 eher glockenförmig darstellt.

In einer alternativen Ausführung wäre es auch denkbar die ursprüngliche U-Form 11 durch einen einzigen durchgehenden Metallschlauch auszubilden. Weiterhin kann der Halterahmen 50 in axialer Richtung, d.h. parallel zur Drehachse A offen sein, da er maßgeblich der Mitnahme der Metallschläuche 111, 112 in Rotationsrichtung dient.

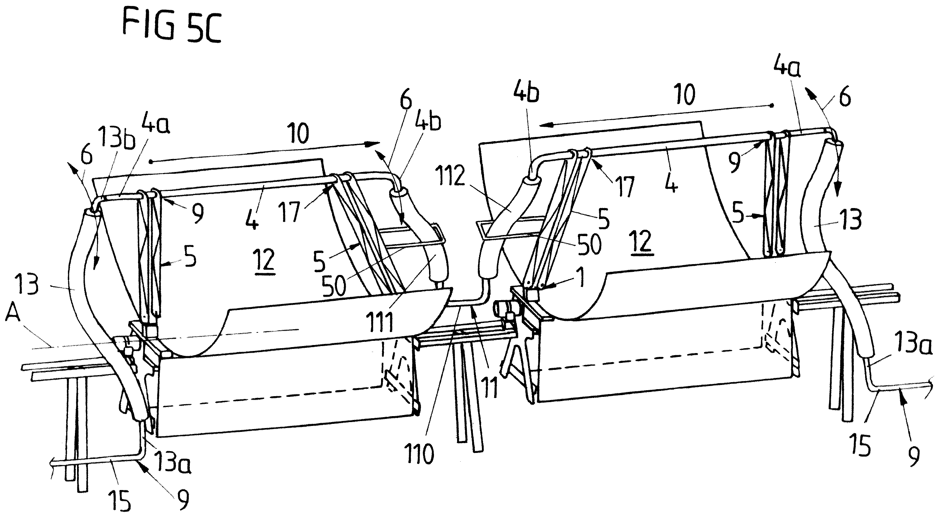

In Fig. 5C ist ein ausgehend von der Fig. 5A abgekühlter oder kühlerer Zustand der solarthermischen Anlage dargestellt. Dabei sind die zwei sich gegenüberliegenden Verbindungsstrukturen 5, 5 der zwei miteinander verbundenen Parabolrinnenspiegel 12, 12 wieder so gelagert, dass sie in der Lage sind, sowohl aufeinander zu als auch voneinander weg und damit in Richtung der Mitte des zugeordneten Parabolrinnenspiegels 12 verschwenkt bzw. verkippt zu werden.

Bei einer Änderung der Längsausdehnung des Absorberrohres 4 wird folglich die Verbindungsstruktur 5 an dem Ende 4b längs zur Drehachse A verschwenkt. Die Fixierung 9 im Bereich des Endes 4a und die ausschließlich die Schwenkbewegung 6 übertragende Verbindungsstruktur 5 gestatten keine Längenänderung des Absorberrohres 4 an dem Ende 4a. Eine einseitige Wärmelängsdehnung 10 des Absorberrohres 4 infolge einer Temperaturänderung wird somit durch die über das Drehlager 1 gelagerte Verbindungsstruktur 5 gewährleistet.

In der gezeigten Darstellung der Fig. 5C hat sich das Absorberrohr 4 jeweils verkürzt, so dass die über das Drehlager 1 verschwenkbar gelagerte Verbindungsstruktur 5 jeweils in Richtung der anderen Verbindungsstruktur 5 des entsprechenden Parabolrinnenspiegels 12 verkippt ist. Die zwischen den beiden Parabolrinnenspiegeln 12, 12 zur Verbindung der Absorberrohre 4, 4 angebrachten Metallschläuche 111, 112 gestatten dieses Verkippen der verschwenkbar gelagerten Verbindungsstrukturen 5, 5 zwischen den beiden Parabolrinnenspiegeln 12, 12 und kompensieren die auftretenden Kräfte parallel zur Drehachse A. Sie weichen daher von der in der Fig. 5A gezeigten U-Form 11 als wärmerem Ausgangszustand ab und bilden im Wesentlichen eine V-Form.

Analog wird bei Erhitzen der Absorberrohre 4, 4 das obere, mit dem jeweiligen Absorberrohr 4 verbundene Ende der verschwenkbar gelagerten Verbindungsstruktur 5 in Richtung des anderen Parabolrinnenspiegels 12 bewegt. Die mit den Absorberrohren 4, 4 der zugeordneten Parabolrinnenspiegel 12, 12 verbundenen Enden der verschwenkbar gelagerten Verbindungsstrukturen 5, 5 werden folglich bei einer Längenänderung eines oder beider Absorberrohre 4, 4 entlang der Drehachse A aufeinander zu oder voneinander weg geführt. Je nach dem bilden dann die Metallschläuche 111 und 112 zusammen mit dem Rohrleitungsstück 110 im Wesentlichen eine V-Form, die in Fig. 5C dargestellt ist, oder ähneln einer um 180 Grad gedrehten V-Form bzw. A-Form, die in Fig. 5B dargestellt ist.

Alternativ kann auch hier nur ein einziger durchgehender flexibler Metallschlauch vorgesehen sein, der zwei Absorberrohre 4, 4 miteinander verbindet.

An dem Gleitlager 17 im Bereich des Endes 4b des Absorberrohres 4 kann zur Anbindung an die Verbindungsstruktur 5 ebenso eine Fixierung 9 vorgesehen sein, so dass eine einseitige Wärmelängsdehnung 10 unmittelbar und direkt auf die verschwenkbar gelagerte Verbindungsstruktur 5 einwirkt und deren Verkippen um das Drehlager 1 bedingt. Alternativ kann vorgesehen sein, dass erst nach einer vorgegebenen Wärmelängsdehnung 10 oder Verkürzung des Absorberrohres 4 das Absorberrohr 4 mit der verschwenkbar gelagerten Verbindungsstruktur 5 derart in Kontakt gebracht wird, dass die Verbindungsstruktur 5 verschwenkt wird. Hierfür wäre beispielsweise ein von der Verbindungsstruktur 5 zunächst beabstandeter Anschlag an dem Absorberrohr 4 denkbar, der erst bei ausreichender Verlängerung oder Verkürzung des Absorberrohres 4 an der Verbindungsstruktur 5 anliegt.

Des Weiteren kann vorgesehen sein, das der Montagezustand der solarthermischen Anlage dem in Fig. 5C exemplarisch gezeigten Zustand entspricht und im Betrieb davon ausgehend der in Fig. 5A gezeigte wärmere Zustand eingenommen wird.

In jedem Fall ist bei der Kompensation von Kräften parallel zur Drehachse A bzw. von Kräften, die in einer zur Drehachse A parallelen Ebene liegen, durch eine Verwendung von flexiblen Metallschläuchen keine weitere Dichtung in diesem Abschnitt des Anschlusssystems notwendig.

Eine weitere alternative Ausführungsvariante ist mit der Fig. 6 gezeigt. In dieser ist anstelle der U-Anordnung von einem oder zwei flexiblen Metallschläuche 111, 112 zur Verbindung der beiden Absorberrohre 4, 4 ein Kompensatoren-Gelenksystem 16* vorgesehen.

Dabei werden zwei Z-förmig gebogene Rohrleitungen 40 verwendet, die einen Mittelabschnitt aufweisen, der um ein Vielfaches länger ist, als die umgebogenen Anfangs- und Endabschnitte. Der Anfangsabschnitt ist jeweils über einen Kompensator 161 mit dem Ende 4b des Absorberrohres 4 verbunden. Der Endabschnitt ist jeweils über einen weiteren Kompensator 161 mit einer kurzen starren und geraden Rohrleitung 40c verbunden, über das somit die beiden Rohrleitungen 40, 40 zusammenhängen.

Das so gebildete Kompensator-Gelenksystem 16* liegt ebenfalls in der von der Längsachse bzw. der Erstreckungsrichtung der Absorberrohre 4, 4 und der Drehachse A aufgespannten Ebene. Ebenso ist jeweils der Mittelabschnitt der Rohrleitung 40 durch einen Halterahmen 50 der Verbindungsstruktur 5 geführt.

Über die aus dem Stand der Technik bekannten Kompensatoren 161, die insbesondere speziell für die axial, d.h. parallel zur Drehachse A und/oder entlang der Erstreckungsrichtung des Absorberrohres 4, auftretende Kräfte ausgelegt sind, und die beschriebene Anordnung der Rohrleitungen 40, 40 ist das Kompensator-Gelenksystem 16* in der Lage, die beidseitige Wärmelängsdehnung 10 zu kompensieren. Verschleißanfällige Dichtungen können entfallen.

Bei den genannten flexiblen Metallschläuchen 13, 111, 112 handelt es sich weiterhin um Ganzmetall-Wellschläuche, insbesondere um mehrwandige Metall-Wellschläuche. Anstelle von flexiblen Metallschläuchen als Verbindungsmittel zwischen den Parabolrinnenspiegel 12 bzw. Parabolrinnenspiegel-Einheiten ist unter Umständen auch denkbar, elastische Elemente einzusetzen, die eine entgegenwirkende Rückstellkraft bei Belastung aufbringen.

Für die Kompensatoren 14 und 161 werden üblicherweise Balg-Kompensatoren eingesetzt, die ebenso wie die Metallschläuche ohne jegliche Dichtung druckfest und vakuumdicht sind.

Wesentlich ist somit in den gezeigten Ausführungsvarianten der Fig. 4 - 6, dass das Absorberrohr 4 als Leitungsrohr der solarthermischen Anlage derart gelagert ist, dass an jedem Ende 4a, 4b des Absorberrohres 4 nur ein spezifischer und nicht überlagerter Belastungszustand im Wesentlichen in einer einzigen Ebene vorliegt. Hierfür kann zusätzlich vorgesehen sein, auch die Festleitung 15 entsprechend so zu fixieren oder zu lagern, dass sie sich bei einer Expansion oder Kontraktion nur an dem Ende dehnt oder verkürzt, das dem Ende 13a des flexiblen Metallschlauchs 13 gegenüberliegt.

Es wird so möglich, für die reine Biegung bei der Schwenkbewegung 6 einen vielfach bewährten Metallschlauch 13 und zur Aufnahme der Wärmedehnung 10 des Absorberrohres 4, als Verbindungsmittel von einer Spiegeleinheit zur anderen, einen Axialkompensator 14 (Fig. 4), insbesondere eine außendruckbelastete Konstruktion, wenigstens einen zweiten Metallschlauch 111, 112 in U-förmiger Anordnung 11 (Fig. 5A-C) oder ein Gelenksystem aus Metall-Kompensatoren 16* (Fig. 6) einzubauen.

Die Verbindungsmittel nehmen ausschließlich die einseitige Wärmedehnung 10 des angeschlossenen Absorberrohres 4 in einer Ebene auf und keine anderen Bewegungen.

Die Folge dieses Anschlusssystems ist, dass auch diese Elemente, Schlauch 111, 112, Rohrleitung 40, 40c oder Kompensatoren 161, nur durch die vorgesehene Bewegung unter Betriebsbedingungen belastet werden und keine Spannungen durch Torsion zu befürchten sind. Damit werden eine einfach berechenbare Lebensdauer und eine hohe Sicherheit gegen vorzeitigen Ausfall erreicht.

Die beschriebenen Ausführungsvarianten werden im Zusammenhang mit Parabolspiegeln 12 als Teil einer Solarkollektoren-Einheit beschrieben. Grundsätzlich sind Ausführungsformen der Erfindung auch bei anderen Typen solarthermischer Kraftwerke einsetzbar, die ein schwenkbares Leitungsrohr mit einem Trägerfluid aufweisen, das von der Sonneneinstrahlung erhitzt wird. Auch sind grundsätzliche andere Anordnungen der Solarkollektoren möglich.

Die Erfindung beschränkt sich in ihrer Ausführung nicht auf die vorstehend angegebenen bevorzugten Ausführungsbeispiele. Vielmehr ist eine Anzahl von Varianten denkbar, die von der erfindungsgemäßen Vorrichtung auch bei grundsätzlich anders gearteten Ausführungen Gebrauch machen.

### Bezugszeichenliste

- 1: Drehlager
- 2: beidseitige Wärmelängsdehnung des Absorberrohres
- 3: Metallschlauch zur Kompensation der Expansion und Rotation
- 3a, 3b: Enden des Metallschlauchs
- 3c: Verbindungsstück
- 4: Absorberrohr
- 4a, 4b: Ende des Absorberrohres
- 5: Verbindungsstruktur
- 6: Schwenkbewegung
- 7: Metallschlauch zur Kompensation der Expansion
- 8: Drehdurchführung
- 9: Axiale Fixierung; Festpunkte
- 10: Einseitige Wärmelängsdehnung des Absorberrohres
- 11: U-förmige Anordnung
- 12: Parabolrinnenspiegel
- 13: Metallschlauch zur Kompensation der Rotation
- 13a, 13b: Ende des Metallschlauches
- 14: Axialkompensator
- 15: Festleitung
- 16, 16*: Kompensator-Gelenksystem
- 16', 16", 16"': Längsdehnungsposition der Rohrleitung
- 17: Führungs- / Gleitlager
- 30', 30", 30"': Schwenkposition
- 31, 32, 35a ,35b: Rohrsegment / Zwischenrohr
- 31b: Ende des Rohrsegmentes
- 33, 34: Rohrgelenk mit Dichtköpfen
- 36: Übergangsabschnitt
- 40, 40c: Rohrleitung
- 50: Halterahmen
- 110: Rohrleitungsstück
- 111, 112: Metallverbindungsschlauch
- 160, 161: (Angular-)Kompensatoren
- 300, 300': Längsdehnungsposition bei Verbindung mit Zwischenrohren
- A: Schwenk- / Drehachse

## Patentansprüche

1. Anschlusssystem für eine solarthermische Anlage mit einem um eine Drehachse schwenkbaren Leitungsrohr (4), das mit einem Trägerfluid gefüllt ist, wobei sich das Leitungsrohr (4) zwischen zwei Enden (4a, 4b) erstreckt und zum Transport des Trägerfluids an einem ersten Ende (4a) über einen Metallschlauch (13) als flexible Rohrverbindung mit einer ortsfesten Festleitung (15) und an seinem zweiten Ende (4b) über mindestens ein Verbindungsmittel (11, 14, 16*) mit einem weiteren Leitungsrohr (4) verbunden ist, **dadurch gekennzeichnet, dass** das Leitungsrohr (4) derart gelagert ist, dass der Metallschlauch (13) nur senkrecht zur Drehachse (A) wirkende Kräfte und das Verbindungsmittel (11, 14, 16*) nur parallel zur Drehachse (A) wirkende Kräfte erfährt.

2. Anschlusssystem nach Anspruch 1, **dadurch gekennzeichnet, dass** das Leitungsrohr (4) derart gelagert ist, dass sich das Leitungsrohr (4) bei einer Wärmeausdehnung (2, 10) entlang der Erstreckungsrichtung des Leitungsrohres (4) nur in Richtung seines zweiten Endes (4b) ausdehnen kann.

3. Anschlusssystems nach Anspruch 1 oder 2, **dadurch gekennzeichnet, dass** das Leitungsrohr (4) im Bereich seines ersten Endes (4a) in seiner Erstreckungsrichtung fixiert und im Bereich seines zweiten Endes (4b) gleitend geführt ist, insbesondere dass das Leitungsrohr (4) an seinem zweiten Ende (4b) in einem Gleitlager (17) geführt ist.

4. Anschlusssystem nach einem der vorangegangenen Ansprüche, **dadurch gekennzeichnet, dass** das Leitungsrohr (4) im Bereich seiner beiden Enden (4a, 4b) jeweils mit einer Verbindungsstruktur (5, 5) verbunden ist, die zusammen mit dem Leitungsrohr (4) um die Drehachse (A) verschwenkbar gelagert ist, und wobei die dem Verbindungsmittel (11, 14, 16*) zugewandte Verbindungsstruktur (5) zusätzlich längs zur Drehachse (A) verschwenkbar gelagert ist.

5. Anschlusssystem nach den Ansprüchen 2 und 4, **dadurch gekennzeichnet, dass** die längs zur Drehachse (A) verschwenkbar gelagerte Verbindungsstruktur (5) infolge einer Wärmeausdehnung (2, 10) des Leitungsrohres (4) entlang der Erstreckungsrichtung des Leitungsrohres (4) längs zur Drehachse (A) verschwenkbar ist.

6. Anschlusssystem nach einem der vorangegangenen Ansprüche, **dadurch gekennzeichnet, dass** die Festleitung (15) derart gelagert oder fixiert ist, dass sie sich bei einer Expansion oder Kontraktion nur an einem dem Metallschlauch (13) gegenüberliegenden Ende dehnt oder verkürzt.

7. Anschlusssystem nach einem der vorangegangenen Ansprüche, **dadurch gekennzeichnet, dass** innerhalb des Anschlusssystems, ausgehend von der Festleitung (15) bis zu dem weiteren Leitungsrohr (4) keine Dichtungen nötig sind.

8. Anschlusssystem nach einem der vorangegangenen Ansprüche, **dadurch gekennzeichnet, dass** das mindestens eine Verbindungsmittel (11, 14, 16*) ein zwischen den verbundenen Leitungsrohren (4, 4) vorgesehner Axialkompensator (14) ist, insbesondere, dass der Axialkompensator (14) ein außendruckbelasteter Axialkompensator ist.

9. Anschlusssystem nach einem der vorangegangenen Ansprüche 1 bis 7, **dadurch gekennzeichnet, dass** das mindestens eine Verbindungsmittel (11, 14, 16*) wenigstens einen flexiblen Metallschlauch (111, 112) aufweist, der in einer U-Form (11) zwischen den beiden verbundenen Leitungsrohren (4, 4) angeordnet ist.

10. Anschlusssystem nach Anspruch 9, **dadurch gekennzeichnet, dass** zwei flexible, miteinander verbundene Metallschläuche (111, 112) vorgesehen sind, die jeweils einen Schenkel der aus zwei Schenkeln bestehenden U-Form (11) bilden.

11. Anschlusssystem nach einem der vorangegangenen Ansprüche, **dadurch gekennzeichnet, dass** das das mindestens eine Verbindungsmittel (11, 14, 16*) ein Kompensator-Gelenksystem (16*), mit über Kompensatoren (161) verbundenen Rohrleitungen (40), ist.

12. Anschlusssystem nach einem der vorangegangenen Ansprüche 9, 10 oder 11, **dadurch gekennzeichnet, dass** der flexible Metallschlauch (111, 112) oder eine der Rohrleitungen (40) in einem Halterahmen (50) geführt ist, der mit dem Leitungsrohr (4) die Schwenkbewegung (6) um die Drehachse (A) ausführt.

13. Anschlusssystem nach Anspruch 9, sowie einem der vorangegangenen Ansprüche 10 bis 12, soweit rückbezogen auf den Anspruch 9, **dadurch gekennzeichnet, dass** der Metallschlauch (13, 111, 112) als mehrwandiger Metall-Wellschlauch ausgebildet ist.

14. Anschlusssystem nach einem der vorangegangenen Ansprüche, **dadurch gekennzeichnet, dass** das Leitungsrohr ein Absorberrohr (4) der solarthermischen Anlage ist, in dem dem Trägerfluid über Solarkollektoren (12) Energie zugeführt wird.

15. Anschlusssystem nach einem der vorangegangenen Ansprüche, **dadurch gekennzeichnet, dass** die solarthermische Anlage parabolische Rinnenspiegel (12) aufweist, die um die Drehachse (A) schwenkbar sind.

## Claims

1. A connecting system for a solar-thermal installation comprising a conduit tube (4) which is pivotable about an axis of rotation and which is filled with a carrier fluid, wherein the conduit tube (4) extends between two ends (4a, 4b) and for transportation of the carrier fluid is connected at a first end (4a) via a metal hose (13) as flexible tube connection to a stationary fixed conduit (15) and at its second end (4b) via at least one connection means (11, 14, 16*) to a further conduit tube (4), **characterized in that** the conduit tube (4) is mounted such that the metal hose (13) only experiences forces acting vertical to the rotation axis (A) and the connection means (11, 14, 16*) only experiences forces acting parallel to the rotation axis (A).

2. The connecting system according to claim 1, **characterized in that** the conduit tube (4) is mounted such that in the case of a thermal expansion (2, 10) along the direction of extension of the conduit tube (4), the conduit tube (4) can expand only in direction of its second end (4b).

3. The connecting system according to claim 1 or 2, **characterized in that** the conduit tube (4) is fixed in its direction of extension in the region of its first end (4a) and is slidingly guided in the region of its second end (4b), in particular at its second end (4b) the conduit tube (4) is guided in a plain bearing (17).

4. The connecting system according to any of the preceding claims, **characterized in that** in the region of its two ends (4a, 4b) the conduit tube (4) is each connected with a connection structure (5, 5) which is pivotally mounted about the rotation axis (A) together with the conduit tube (4), and wherein the connection structure (5) facing the connection means (11, 14, 16*) additionally is pivotally mounted along the rotation axis (A).

5. The connecting system according to claims 2 and 4, **characterized in that** as a result of a thermal expansion (2, 10) of the conduit tube (4) along the direction of extension of the conduit tube (4) the connection structure (5) pivotally mounted along the rotation axis (A) can be pivoted along the rotation axis (A).

6. The connecting system according to any of the preceding claims, **characterized in that** the fixed conduit (15) is mounted or fixed such that in the case of an expansion or contraction it is only expanded or contracted at an end opposite to the metal hose (13).

7. The connecting system according to any of the preceding claims, **characterized in that** inside the connecting system, proceeding from the fixed conduit (15) up to the further conduit tube (4), no seals are necessary.

8. The connecting system according to any of the preceding claims, **characterized in that** the at least one connection means (11, 14, 16*) is an axial compensator (14) provided between the connected conduit tubes (4, 4), in particular the axial compensator (14) is an axial compensator loaded by external pressure.

9. The connecting system according to any of the preceding claims 1 to 7, **characterized in that** the at least one connection means (11, 14, 16*) includes at least one flexible metal hose (111, 112) which is arranged in a U-shape (11) between the two connected conduit tubes (4, 4).

10. The connecting system according to claim 9, **characterized in that** two flexible interconnected metal hoses (111, 112) are provided, which each form a leg of the U-shape (11) consisting of two legs.

11. The connecting system according to any of the preceding claims, **characterized in that** the at least one connection means (11, 14, 16*) is a compensator joint system (16*) with tube conduits (40) connected via compensators (161).

12. The connecting system according to any of the preceding claims 9, 10 or 11, **characterized in that** the flexible metal hose (111, 112) or one of the tube conduits (40) is guided in a holding frame (50) which along with the conduit tube (4) performs the pivoting movement (6) about the rotation axis (A).

13. The connecting system according to claim 9 and any of the preceding claims 10 to 12, as far as related to claim 9, **characterized in that** the metal hose (13, 111, 112) constitutes a multi-wall corrugated metal hose.

14. The connecting system according to any of the preceding claims, **characterized in that** the conduit tube is an absorber tube (4) of the solar-thermal installation, in which energy is supplied to the carrier fluid via solar collectors (12).

15. The connecting system according to any of the preceding claims, **characterized in that** the solar-thermal installation includes parabolic trough mirrors (12) which can be pivoted about the rotation axis (A).

## Revendications

1. Système de raccordement pour une centrale héliothermique avec un conduit (4) pouvant pivoter autour d'un axe de rotation, qui est rempli d'un fluide porteur, dans lequel le conduit (4) s'étend entre deux extrémités (4a, 4b) et est raccordé pour le transport du fluide porteur à une première extrémité (4a) par un tuyau souple métallique (13) en tant que liaison tubulaire flexible avec une conduite rigide fixe (15) et à sa deuxième extrémité (4b) par au moins un moyen de liaison (11, 14, 16*) à un autre conduit (4), **caractérisé en ce que** le conduit (4) est monté de telle manière que le tuyau souple métallique (13) ne subisse que des forces agissant perpendiculairement à l'axe de rotation (A) et que le moyen de liaison (11, 14, 16*) ne subisse que des forces agissant parallèlement à l'axe de rotation (A).

2. Système de raccordement selon la revendication 1, **caractérisé en ce que** le conduit (4) est monté de telle manière que le conduit (4) ne puisse se dilater qu'en direction de sa deuxième extrémité (4b) lors d'une dilatation thermique (2, 10) le long de la direction d'extension du conduit (4).

3. Système de raccordement selon la revendication 1 ou 2, **caractérisé en ce que** le conduit (4) est fixé dans la région de sa première extrémité (4a) dans sa direction d'extension et est guidé de façon glissante dans la région de sa deuxième extrémité (4b), en particulier **en ce que** le conduit (4) est guidé à sa deuxième extrémité (4b) dans un palier lisse (17).

4. Système de raccordement selon l'une quelconque des revendications précédentes, **caractérisé en ce que** le conduit (4) est relié dans la région de ses deux extrémités (4a, 4b) respectivement à une structure de liaison (5, 5), qui est montée de façon pivotante autour de l'axe de rotation (A) en même temps que le conduit (4), et dans lequel la structure de liaison (5) tournée vers le moyen de liaison (11, 14, 16*) est en plus montée de façon pivotante longitudinalement à l'axe de rotation (A).

5. Système de raccordement selon les revendications 2 et 4, **caractérisé en ce que** la structure de liaison (5) montée de façon pivotante longitudinalement à l'axe de rotation (A) peut pivoter longitudinalement à l'axe de rotation (A) par suite d'une dilatation thermique (2, 10) du conduit (4) le long de la direction d'extension du conduit (4).

6. Système de raccordement selon l'une quelconque des revendications précédentes, **caractérisé en ce que** la conduite rigide (15) est montée ou fixée de telle manière qu'elle s'allonge ou se raccourcisse lors d'une dilatation ou d'une contraction uniquement à une extrémité opposée au tuyau métallique (13).

7. Système de raccordement selon l'une quelconque des revendications précédentes, **caractérisé en ce qu'**aucun joint n'est nécessaire à l'intérieur du système de raccordement, à partir de la conduite rigide (15) jusqu'à l'autre conduit (4).

8. Système de raccordement selon l'une quelconque des revendications précédentes, **caractérisé en ce que** l'au moins un moyen de liaison (11, 14, 16*) est un compensateur axial (14) prévu entre les conduits reliés (4, 4), en particulier **en ce que** le compensateur axial (14) est un compensateur axial soumis à une pression extérieure.

9. Système de raccordement selon l'une quelconque des revendications précédentes 1 à 7, **caractérisé en ce que** ledit au moins un moyen de liaison (11, 14, 16*) présente au moins un tuyau métallique flexible (111, 112), qui est disposé sous une forme de U (11) entre les deux conduits reliés (4, 4).

10. Système de raccordement selon la revendication 9, **caractérisé en ce qu'**il est prévu deux tuyaux métalliques flexibles (111, 112) reliés l'un à l'autre, qui forment respectivement une branche de la forme en U (11) composée de deux branches.

11. Système de raccordement selon l'une quelconque des revendications précédentes, **caractérisé en ce que** ledit au moins un moyen de liaison (11, 14, 16*) est un système articulé de compensateur (16*), avec des conduites (40) reliées par des compensateurs (161).

12. Système de raccordement selon l'une quelconque des revendications précédentes 9, 10 ou 11, **caractérisé en ce que** le tuyau métallique flexible (111, 112) ou une des conduites (40) est guidé(e) dans un cadre de maintien (50), qui exécute avec le conduit (4) le mouvement de pivotement (6) autour de l'axe de rotation (A).

13. Système de raccordement selon la revendication 9, ainsi que selon l'une quelconque des revendications précédentes 10 à 12, dans la mesure où elles sont rattachées à la revendication 9, **caractérisé en ce que** le tuyau métallique (13, 111, 112) est réalisé sous la forme d'un tuyau métallique ondulé à parois multiples.

14. Système de raccordement selon l'une quelconque des revendications précédentes, **caractérisé en ce que** le conduit est un tube absorbeur (4) de la centrale héliothermique, dans lequel de l'énergie est fournie au fluide porteur au moyen de collecteurs solaires (12).

15. Système de raccordement selon l'une quelconque des revendications précédentes, **caractérisé en ce que** la centrale héliothermique présente des miroirs striés paraboliques (12), qui peuvent pivoter autour de l'axe de rotation (A).
